# EUROPEAN PATENT APPLICATION

(11) **EP 4 527 876 A1**
(43) Date of publication of application: **26.03.2025**
(21) Application number: 23807233.4
(22) Date of filing: 15.02.2023
(51) Int. Cl.: C08J 5/04, C08J 7/04, C08L 1/02, C08L 3/00, C08L 67/00, C08L 77/00, C08L 97/00, C08L 99/00, C08L 101/00, C08L 101/16

(54) **COMPOSITE RESIN MOLDED BODY AND METHOD FOR PRODUCING SAME**

(30) Priority: 16.05.2022 JP 2022080187
(71) Applicant: Panasonic Intellectual Property Management Co., Ltd., Kadoma-shi, Osaka 571-0057 (JP)
(72) Inventor: NAGINO Toshifumi, Kadoma-shi, Osaka 571-0057 (JP); FUKU Ami, Kadoma-shi, Osaka 571-0057 (JP); HAMABE Masashi, Kadoma-shi, Osaka 571-0057 (JP); IMANISHI Masayoshi, Kadoma-shi, Osaka 571-0057 (JP)
(74) Representative: Novagraaf International SA
(86) International application number: PCT/JP2023/005272
(87) International publication number: WO 2023/223615

(57) **Abstract**

A composite resin molded body includes a base resin, a plurality of natural fibers dispersed in the base resin, and a microorganism and/or enzyme supported on the plurality of natural fibers, in which at least a part of surfaces of the natural fibers is covered with a covering resin, the covering resin is reduced in amount at a center of the composite resin molded body with respect to the covering resin at a surface of the composite resin molded body, and at least one of the plurality of natural fibers includes a portion exposed on the surface of the composite resin molded body.

## Description

### TECHNICAL FIELD

The present disclosure relates to a composite resin molded body having high mechanical strength and a controlled biodegradation speed in a humid environment, and a method for producing the same.

### BACKGROUND ART

So-called "general-purpose plastics" such as polyethylene (PE), polypropylene (PP), polystyrene (PS), and polyvinyl chloride (PVC) are not only very inexpensive but also easy to mold, and have a weight as small as a fraction of that of metal or ceramics. Thus, general-purpose plastics are often used as materials of various daily commodities such as bags, various packaging, various containers, and sheets, and as materials for industrial components such as automobile components and electrical components, household electrical appliances, building supplies, daily necessities, and miscellaneous goods.

Under such circumstances, the amount of plastic waste after use is increasing year by year, and plastic waste, which is a substance having a property of being hardly decomposed, accumulates in a natural environment and causes pollution problems such as destruction and pollution in the natural environment. In recent years, biodegradable plastics that are decomposed into water and carbon dioxide in the natural environment have been proposed as one of measures to solve such various problems, and expanded use of the biodegradable plastics instead of general-purpose plastics produced using petroleum-based raw materials is expected.

However, biodegradable plastics have disadvantages such as insufficient mechanical strength as compared with general-purpose plastics. Therefore, biodegradable plastics do not have sufficient properties required for materials used for machine products such as automobiles and various industrial products including electric/electronic/information products, and the application range thereof is currently limited.

On the other hand, the biodegradation speed of the biodegradable plastics after disposal is greatly affected by the environment. In an environment with a small number of microorganisms, such as in the ocean, it takes significantly long time to completely decompose the biodegradable plastics, and the properties of biodegradability are not sufficiently utilized. In order to solve such problems, various methods have been proposed to accelerate the decomposition of the biodegradable plastics after disposal.

To solve such a problem, there is disclosed a molded article (see PTL 1, for example) in which a decomposition promoting layer composed of polyvinyl alcohol or starch mixed with microorganisms is applied to a surface of a biodegradable plastic to promote decomposition inside the biodegradable plastic. Also disclosed is a method for producing a molded body including adding a microorganism having an enzyme activity for decomposing a biodegradable plastic to the biodegradable plastic at the time of melt-kneading or molding, or applying the microorganism to the surface of the molded body before the surface of the molded plastic is solidified and then pressurizing the molded plastic (see PTL 2, for example).

### Citation List

### Patent Literature

PTL 1: Unexamined Japanese Patent Publication No. 2006-137917
PTL 2: Unexamined Japanese Patent Publication No. 2013-209587

### SUMMARY OF THE INVENTION

A composite resin molded body according to one aspect of the present disclosure includes a base resin, a plurality of natural fibers dispersed in the base resin, and a microorganism and/or enzyme supported on the plurality of natural fibers, in which at least a part of surfaces of the plurality of natural fibers is covered with a covering resin, the covering resin is reduced in amount at a center of the composite resin molded body with respect to the covering resin at a surface of the composite resin molded body, and at least one of the plurality of natural fibers includes a portion exposed on the surface of the composite resin molded body.

A method for producing a composite resin molded body according to one aspect of the present disclosure includes a step of preparing a microorganism and/or enzyme, a natural fiber, a covering resin having water solubility, and a base resin, a step of causing the natural fiber to carry the microorganism and/or enzyme, a base resin melt-kneading step of subjecting the natural fiber to a melt-kneading treatment together with the base resin and advancing fibrillation from an end in a fiber length direction of the natural fiber to obtain a composite resin composition in which a surface area of a defibrated portion at the end is enlarged, a step of molding the composite resin composition to obtain a composite resin molded body, and a step of applying a covering resin to a surface of the composite resin molded body, impregnating the composite resin molded body with the covering resin, and then drying the covering resin to obtain the composite resin molded body in which the covering resin is reduced in amount at a center of the composite resin molded body with respect to the covering resin at the surface of the composite resin molded body, and at least a part of a surface of the natural fiber is covered with the covering resin.

### BRIEF DESCRIPTION OF THE DRAWINGS

Fig. 1 is a schematic sectional view of a composite resin molded body according to a first exemplary embodiment.
Fig. 2 is a schematic sectional view of natural fibers contained in the composite resin molded body according to the first exemplary embodiment.
Fig. 3 is a schematic view of a natural fiber having a defibrated site contained in the composite resin molded body according to the first exemplary embodiment.
Fig. 4 is a production process flow diagram of the composite resin molded body according to the first exemplary embodiment.
Fig. 5 is a table showing configurations and measurement results of composite resin molded bodies in Examples 1 and 2 in the first exemplary embodiment and Comparative Examples 1 to 3.

### DESCRIPTION OF EMBODIMENT

In the method described in PTL 1, it is necessary to perform a treatment such as roughening the surface of the molded body or providing a permeation hole before applying the decomposition promoting layer, which is complicated and disadvantageous in terms of cost.

On the other hand, the method described in PTL 2 has a problem that it takes time to complete the decomposition because the biodegradation speed becomes uniform or slow from the surface of the molded body toward the center of the molded body because microorganisms having an enzyme activity to decompose the biodegradable plastic are present uniformly in the molded body or in a large amount on the surface of the molded body.

The present disclosure has been made to solve the above problems, and an object of the present disclosure is to provide a composite resin molded body that maintains mechanical strength at the time of use and promotes biodegradation in a humid environment such as in the ocean or soil after disposal, and a method for producing the composite resin molded body.

A composite resin molded body according to a first aspect includes a base resin, a plurality of natural fibers dispersed in the base resin, and a microorganism and/or enzyme supported on the plurality of natural fibers, in which at least a part of surfaces of the plurality of natural fibers is covered with a covering resin, the covering resin is reduced in amount at a center of the composite resin molded body with respect to the covering resin at a surface of the composite resin molded body, and at least one of the plurality of natural fibers includes a portion exposed on the surface of the composite resin molded body.

In a composite resin molded body according to a second aspect, in the first aspect, the covering resin may be reduced in amount from the surface of the composite resin molded body toward the center of the composite resin molded body.

In a composite resin molded body according to a third aspect, in the first or second aspect, the plurality of natural fibers may have a moisture regain, as measured by a method defined in JIS L0105:2020, of greater than or equal to 5%.

In a composite resin molded body according to a fourth aspect, in any one of the first to third aspects, the base resin may be a biodegradable resin containing any one selected from the group consisting of polyhydroxyalkanoic acids, polylactic acids, polybutylene succinates, polybutylene adipate terephthalates, polycaprolactones, polyamides, and modified starches.

In a composite resin molded body according to a fifth aspect, in any one of the first to fourth aspects, the covering resin may be a water-soluble resin such as polyvinyl alcohol, polyethylene oxide, carboxymethyl cellulose, or a starch-based resin.

In a composite resin molded body according to a sixth aspect, in any one of the first to fifth aspects, the plurality of natural fibers may have a fiber surface carrying the microorganism and/or enzyme.

In a composite resin molded body according to a seventh aspect, in any one of the first to sixth aspects, the plurality of natural fibers may be celluloses.

In a composite resin molded body according to an eighth aspect, in any one of the first to seventh aspects, the plurality of natural fibers may include a defibrated site at an end in a fiber length direction.

In a composite resin molded body according to a ninth aspect, in any one of the first to eighth aspects, a content of the plurality of natural fibers may be greater than or equal to 10 mass% and less than or equal to 99 mass% relative to 100 mass% of the composite resin molded body.

A method for producing a composite resin molded body according to a tenth aspect includes a step of preparing a microorganism and/or enzyme, a natural fiber, a covering resin having water solubility, and a base resin, a step of causing the natural fiber to carry the microorganism and/or enzyme, a base resin melt-kneading step of subjecting the natural fiber to a melt-kneading treatment together with the base resin and advancing fibrillation from an end in a fiber length direction of the natural fiber to obtain a composite resin composition in which a surface area of a defibrated portion at the end is enlarged, a step of molding the composite resin composition to obtain a composite resin molded body, and a step of applying a covering resin to a surface of the composite resin molded body, impregnating the composite resin molded body with the covering resin, and then drying the covering resin to obtain the composite resin molded body in which the covering resin is reduced in amount at a center of the composite resin molded body with respect to the covering resin at the surface of the composite resin molded body, and at least a part of a surface of the natural fiber is covered with the covering resin.

The composite resin molded body according to one aspect of the present disclosure can realize a composite resin molded body having high elastic modulus and controlled biodegradation speed in a humid environment as compared with a resin alone.

Hereinafter, a composite resin molded body according to an exemplary embodiment of the present disclosure and a method for producing the same will be described with reference to the accompanying drawings. In the following description, the same components are denoted by the same reference marks, and the description thereof is appropriately omitted.

### (First exemplary embodiment)

### <Composite resin molded body>

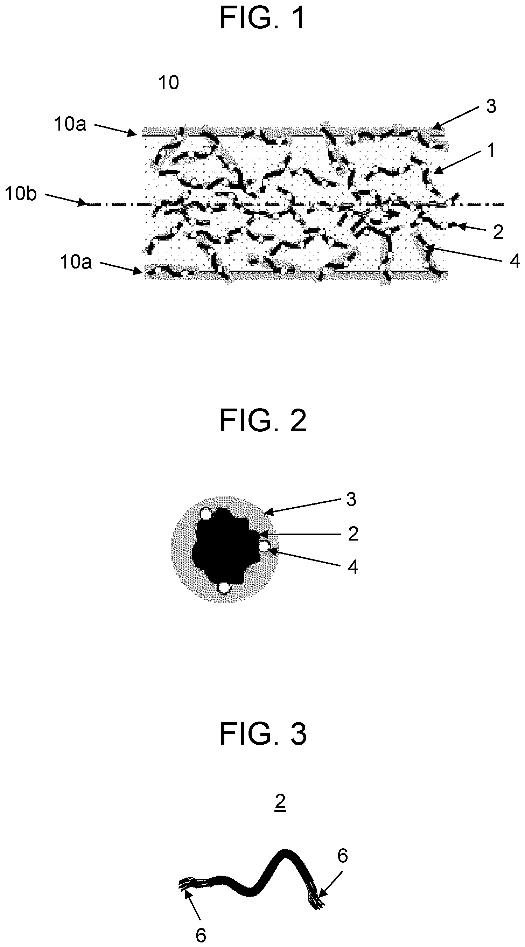

Fig. 1 is a schematic sectional view of composite resin molded body 10 according to a first exemplary embodiment. Fig. 2 is a schematic sectional view of natural fibers 2 contained in the composite resin molded body according to the first exemplary embodiment.

Composite resin molded body 10 according to the first exemplary embodiment is composed of a melt-kneaded product of base resin 1 and natural fibers 2 carrying microorganism and/or enzyme 4 and covered with covering resin 3. As illustrated in the schematic sectional views of Figs. 1 and 2, in composite resin molded body 10, natural fibers 2 carrying microorganism and/or enzyme 4 and covered with covering resin 3 are dispersed in base resin 1. Covering resin 3 is impregnated into composite resin molded body 10, and the amount of covering resin 3 covering natural fibers 2 is reduced at center 10b of composite resin molded body 10 with respect to the amount of covering resin 3 covering natural fibers 2 at surface 10a of composite resin molded body 10, or the amount of covering resin 3 covering natural fibers 2 is reduced from surface 10a of composite resin molded body 10 toward center 10b of composite resin molded body 10.

Fig. 3 is a schematic view illustrating natural fiber 2 having defibrated site 6 contained in the composite resin molded body according to the first exemplary embodiment. As illustrated in Fig. 3, having defibrated site 6 at an end of natural fiber 2 causes the specific surface area of defibrated site 6 to increase and the number of contact points between natural fibers 2 to increase. This make is possible to absorb water into the inside of composite resin molded body 10 via the contact points between natural fibers 2 in a humid environment.

According to composite resin molded body 10, in which at least one natural fiber 2 is exposed on surface 10a of composite resin molded body 10, and natural fibers 2 have contact points with each other, the composite resin molded body 10 has high elastic modulus and high water absorbability. When covering resin 3 is dissolved through water absorption of natural fibers 2 in a humid environment, microorganism and/or enzyme 4 supported on natural fibers 2 is released, and decomposition of base resin 1 is promoted. At this time, the amount of covering resin 3 covering natural fiber 2 is reduced at center 10b of composite resin molded body 10 with respect to the amount of covering resin 3 covering natural fiber 2 at surface 10a of composite resin molded body 10, or the amount of covering resin 3 covering natural fiber 2 is reduced from surface 10a of composite resin molded body 10 toward center 10b of composite resin molded body 10. Thus, when covering resin 3 on surface 10a of composite resin molded body 10 is dissolved, microorganism and/or enzyme 4 supported on natural fiber 2 is released, and decomposition of base resin 1 on surface 10a of composite resin molded body 10 is promoted. Thereafter, since covering resin 3 is reduced toward center 10b of composite resin molded body 10, dissolution of covering resin 3 is unnecessary, microorganism and/or enzyme 4 supported on natural fiber 2 is easily released, and decomposition of base resin 1 is accelerated. Thus, it is possible to realize composite resin molded body 10 that maintains high rigidity during use and has excellent biodegradability in a humid environment such as in the ocean or soil after disposal.

Hereinafter, each member constituting the composite resin molded body will be described.

### <Base resin>

In the first exemplary embodiment, base resin 1 is preferably a biodegradable plastic containing, for example, any one selected from the group consisting of polyhydroxy acids such as polylactic acid, polyglycolic acid, and polycaprolactone, polyhydroxyalkanoates (polyhydroxyalkanoic acid: PHA) such as polyhydroxybutyrate and polyhydroxyvalerate, polyester-based resins including polyalkylene dicarboxylates such as polyalkylene dicarboxylate, polybutylene adipate terephthalate, polyethylene succinate, and polybutylene succinate, polyamide, and modified starches. To ensure good moldability, a thermoplastic resin is preferable, and the above resins may be used alone or in combination of two or more thereof. Base resin 1 is not limited to the above materials as long as it has biodegradability.

In the first exemplary embodiment, the term "biodegradable plastic" refers to "resin that has a function similar to that of a conventional petroleum-derived resin at the time of use, and is finally decomposed into water and carbon dioxide by microorganisms in the soil and the ocean in nature after use". Specific examples of the biodegradable plastic include polyhydroxyalkanoates such as polyhydroxybutyrate and polyhydroxyvalerate; polyhydroxy acids such as polylactic acid, polyglycolic acid, and polycaprolactone; polyester-based resins including polyalkylene dicarboxylates such as polybutylene adipate terephthalate, polyethylene succinate, and polybutylene succinate; and modified starches. Examples of the polyester-based resin include, in addition to a homopolymer of a polyester-based monomer, a copolymer of a polyester-based monomer such as poly(3-hydroxybutyrate-co-3-hydroxyvalerate), and a copolymer of a polyester-based monomer and another copolymerizable monomer. These polyester-based resins may be used alone or in combination of two or more thereof.

### <Natural fiber>

Next, natural fiber 2 will be described. The first main purpose of adding natural fiber 2 (hereinafter, may be simply referred to as "fiber") contained in composite resin molded body 10 according to the first exemplary embodiment is to cause composite resin molded body 10 to absorb water in the soil and the ocean without imposing a load on the environment when composite resin molded body 10 is discarded after use, to thereby bring covering resin 3 into contact with water and dissolve covering resin 3. For this purpose, natural fiber 2 preferably has high water absorbability, and the moisture regain of natural fiber 2 is preferably greater than or equal to 5% when measured by a method defined in JIS L0105:2020. Specifically, pulp, cellulose, cellulose nanofibers, lignocellulose, lignocellulose nanofibers, cotton, silk, and hemp are preferable.

The second purpose of adding natural fiber 2 is to improve mechanical strength and to improve dimensional stability by decreasing the linear expansion coefficient. For this purpose, natural fiber 2 preferably has a higher elastic modulus than base resin 1. Specific examples thereof include pulp, cellulose, cellulose nanofibers, lignocellulose, lignocellulose nanofibers, cotton, silk, wool, and hemp. Among them, celluloses are particularly preferable from the viewpoint of availability, high elastic modulus, and low linear expansion coefficient. Natural fiber 2 is not limited to the above materials as long as it can improve mechanical strength and has water absorbability.

The content of natural fibers 2 carrying microorganism and/or enzyme 4 in composite resin molded body 10 is preferably greater than or equal to 10 vol% and less than or equal to 99 vol% when the content of composite resin molded body 10 is 100 vol%. When the content of natural fibers 2 carrying microorganism and/or enzyme 4 is less than 10 vol%, natural fibers 2 are less likely to have contact points with each other in composite resin molded body 10, and thus sufficient water absorbability is not attained. On the other hand, when the content of natural fibers 2 carrying microorganism and/or enzyme 4 is greater than 99 vol%, the proportion of base resin 1 decreases, and thus the effect of bonding natural fibers 2 to each other is lost and moldability deteriorates.

The form of natural fiber 2 in composite resin molded body 10 will be described. To improve the water absorbability of composite resin molded body 10, natural fiber 2 is preferably exposed on a surface of composite resin molded body 10. With natural fiber 2 being exposed on the surface of composite resin molded body 10, water is absorbed from an exposed portion, and water is absorbed into the inside of composite resin molded body 10 because of a capillary phenomenon of natural fiber 2. Natural fiber 2 exposed on the surface of composite resin molded body 10 has higher water absorbability as the specific surface area is smaller. This is because when the specific surface area of natural fiber 2 exposed on the surface is large, water repellency is enhanced because of the effect of fine irregularities. Further, as illustrated in Fig. 3, by having defibrated site 6 at an end of natural fiber 2, the specific surface area of defibrated site 6 increases, and the number of contact points between natural fibers 2 increases, and thus the water absorption percentage can be increased via the contact points of natural fibers 2 in a humid environment.

The central portion of natural fiber 2, which has a small specific surface area and is not defibrated, is less entangled with base resin 1 and is easily exposed to the surface of the molded body depending on the molding conditions. On the other hand, the tip portion of defibrated natural fiber 2 is highly entangled with base resin 1, and enters the inside together with base resin 1. This makes it possible to obtain composite resin molded body 10 in which the central portion of natural fiber 2 not including both ends is exposed to the surface.

The tip defibrated site is preferably greater than or equal to 5% and less than or equal to 50% of fiber length L of entire natural fiber 2. When the length of the defibrated site is less than 5% of total fiber length L, the elastic modulus is not improved because the specific surface area is small, and when the length of the defibrated site is greater than 50%, the defibrated site having a high aspect ratio is exposed on the surface of the molded body, and thus water absorbability deteriorates.

Next, properties of natural fiber 2 will be described. The types of base resin 1 and natural fiber 2 are as described above, but when natural fiber 2 is too soft, that is, when natural fiber 2 has a small elastic modulus with respect to base resin 1, composite resin molded body 10 has a small elastic modulus as a whole, resulting in a decrease in strength. On the other hand, when natural fiber 2 is too hard, that is, when natural fiber 2 has a large elastic modulus with respect to base resin 1, shock waves generated at the time of impact are not propagated but absorbed at the interface between base resin 1 and natural fiber 2, and thus cracks and creases are likely to occur in the vicinity of the interface, and as a result, impact strength deteriorates. Thus, in the relationship between the elastic modulus of base resin 1 and the elastic modulus of natural fiber 2, the elastic modulus of natural fiber 2 is higher than the elastic modulus of base resin 1, and the difference between the elastic moduli is preferably as small as possible. The optimum relationship is calculated from simulation results, and the difference in elastic modulus between base resin 1 and natural fiber 2 is preferably within 20 GPa.

Further, these natural fibers 2 may be subjected to a surface treatment for the purpose of, for example, improving adhesion to base resin 1 or dispersibility in composite resin molded body 10, but when the water absorbability of natural fibers 2 is impaired by the surface treatment, it is preferable not to perform the surface treatment in advance.

### <Additive>

An additive may be used as necessary for the purpose of, for example, improving the affinity between base resin 1 and natural fiber 2. Additives that are typically used can be used.

### <Covering resin>

Next, covering resin 3 will be described. During use of composite resin molded body 10, covering resin 3 according to the first exemplary embodiment is used for the purpose of protecting microorganism and/or enzyme 4 supported on natural fiber 2 and preventing contact with base resin 1. After disposal of composite resin molded body 10, to promote biodegradation in a humid environment, covering resin 3 needs to be dissolved and release microorganism and/or enzyme 4 supported on natural fiber 2. Thus, the covering resin is preferably a water-soluble resin that is soluble in water at a temperature of 20°C. Specific examples thereof include polyvinyl alcohol, polyethylene oxide, carboxymethyl cellulose, and a modified starch. The above resins may be used alone or in combination of two or more thereof. Covering resin 3 is not limited to the above materials as long as it has water solubility. In addition, as a water-resistant treatment, a reaction of connecting water-soluble resins to each other to change physical and chemical properties may be performed. For example, a crosslinking agent may be added depending on the type of the water-soluble resin, or treatment such as heat treatment or radiation irradiation may be performed as post-treatment. The crosslinking agent preferably contains any one or more selected from the group consisting of isocyanate-based crosslinking agents, epoxy-based crosslinking agents, oxazoline-based crosslinking agents, aziridine-based crosslinking agents, and metal chelate-based crosslinking agents, but the crosslinking agent is not limited to these agents as long as it is a crosslinking agent that can obtain water resistance.

The presence state of covering resin 3 in composite resin molded body 10 will be described. By controlling content of covering resin 3 in composite resin molded body 10, the release of microorganism and/or enzyme 4 supported on natural fiber 2 can be delayed, to thereby control the decomposition rate. Thus, for example, when the content of covering resin 3 in composite resin molded body 10 is as large as greater than or equal to 50 mass%, the release of microorganism and/or enzyme 4 supported on natural fiber 2 is delayed, and the speed until the start of decomposition is reduced. On the other hand, when the content is less than 50 mass%, the release of microorganism and/or enzyme 4 supported on natural fiber 2 is accelerated, and the speed until the start of decomposition is improved.

### <Microorganism and/or enzyme>

Next, microorganism and/or enzyme 4 will be described. Microorganism and/or enzyme 4 contained in the composite resin molded body according the first exemplary embodiment is used for the purpose of accelerating decomposition of composite resin molded body 10 in a humid environment. Microorganism and/or enzyme 4 in the present embodiment differs depending on base resin 1, and specific examples thereof include Amycolatopsis microorganisms as a polylactic acid decomposer and a polybutylene succinate decomposer, Streptomyces microorganisms, Pseudomonas microorganism as a poly3-hydroxybutyrate decomposer, such as Pseudomonas lemoignei, Alcaligenes microorganisms, and Alcaligenes paradoxus, and Pseudomonas microorganisms such as Pseudomonas stutzeri, Pseudomonas aeruginosa, Pseudomonas vesicularis, Alcaligenes microorganisms, Acinetobacter microorganisms, and Xanthomonas microorganisms as a decomposer of polyethers such as polyethylene glycol.

Examples of the enzyme in the first exemplary embodiment include various enzymes extracted from the above-described microorganisms. Specific examples thereof include Proteinase K as an enzyme for decomposing polylactic acid; polyvinyl alcohol dehydrogenase, polyvinyl alcohol oxidase, secondary alcohol oxidase, and the like as an enzyme for decomposing polyvinyl alcohol; PHB depolymerase as an enzyme for decomposing poly(3-hydroxybutyric acid); and cholesterol esterase, Chitopearl cholesterol esterase, urease, and the like as an enzyme for decomposing polyurethane. The above-described microorganisms and/or enzymes may be used alone or in combination of two or more thereof. The enzyme is not limited to the above materials as long as it has decomposability with respect to base resin 1.

### <Method for producing composite resin molded body>

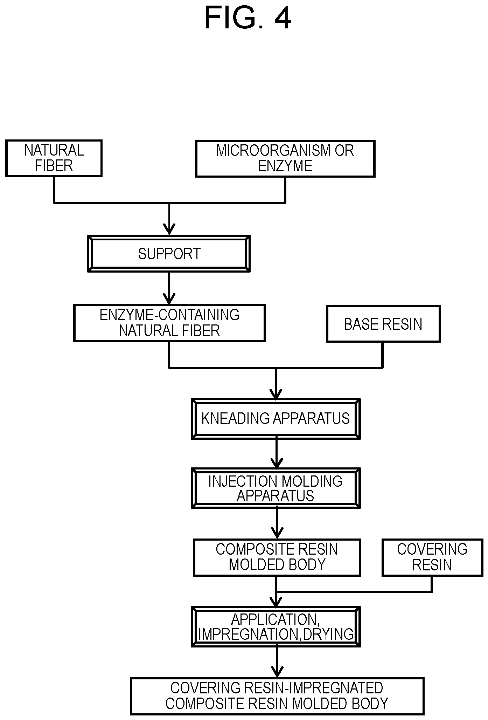

Next, a method of producing composite resin molded body 10 according to the first exemplary embodiment will be described. Fig. 4 is a flowchart illustrating a production process of composite resin molded body 10 according to the first exemplary embodiment.
(1) Microorganism and/or enzyme 4 is supported on the surface of natural fiber 2 in advance. Examples of the method for supporting microorganism and/or enzyme 4 include physical adsorption by dry blending, an impregnation method of natural fibers using a dispersion solvent, a crosslinking method, and an entrapment method. The method for supporting microorganism and/or enzyme 4 is not limited to the above-described methods as long as it is a method capable of holding microorganism and/or enzyme 4 on the surface of natural fiber 2.
(2) Base resin 1 and natural fiber 2 carrying microorganism and/or enzyme 4 are dry-blended, and then the mixture is fed into a melt-kneading apparatus and melt-kneaded in the apparatus. As a result, the shearing action of the apparatus promotes defibration of aggregates of natural fibers 2, and natural fibers 2 carrying microorganism and/or enzyme 4 can be finely dispersed in base resin 1. At this time, by adjusting the shear conditions, an end of natural fiber 2 is defibrated as illustrated in Fig. 3, and a defibrated site can be obtained. For example, as shown in Example 1 described later, under the condition of a material temperature of 180°C and a time of about 5 minutes, it is considered that microorganism and/or enzyme 4 is not thermally damaged from molten base resin 1.

Conventionally, when fibers are combined with a resin, fibers that have been defibrated in advance by a pretreatment such as wet dispersion have been used. However, when the natural fibers are defibrated in a solvent used in wet dispersion, the fibers swell because of the solvent. Therefore, in order for the natural fibers to sufficiently absorb water and expand in the composite resin molded material and the composite member, the solvent in the natural fibers needs to be dried before the natural fibers are kneaded with the base resin. In addition, in the defibration by wet dispersion, the fibers are easier to be defibrated than to be defibrated in the molten base resin, and thus it is difficult to defibrate only an end of the fiber, and the entire natural fiber is defibrated. Further, there is a problem that the number of steps increases and productivity deteriorates by combining the pretreatment.

On the other hand, in the process of producing composite resin molded body 10 according to the first exemplary embodiment, a melt-kneading treatment (all-dry method) is performed together with base resin 1 without performing a pretreatment by wet dispersion for the purpose of defibrating natural fiber 2. In this method, since the wet dispersion treatment of natural fiber 2 is not performed, swelling of natural fiber 2 in the production process is suppressed, and the water absorption percentage of natural fiber 2 in composite resin molded body 10 can be improved. By subjecting natural fiber 2 to a drying treatment in advance or during kneading, the water absorption percentage in a humid environment in composite resin molded body 10 can be further improved. When natural fiber 2 has a defibrated site, natural fibers 2 have many contact points inside composite resin molded body 10, and the water absorption percentage of composite resin molded body 10 can be increased via the contact points between the fibers.

To produce natural fiber 2 of the present exemplary embodiment by the all-dry method, it is preferable to apply high shear stress at the time of kneading. Specific examples of the kneading method include a single screw kneader, a twin screw kneader, a roll kneader, a Banbury mixer, and a combination thereof. From the viewpoint of easy application of high shear and high mass productivity, a continuous twin screw kneader and a continuous roll kneader are particularly preferable. A kneading method other than the above may be used as long as high shear stress can be applied.

(3) An injection-molded article as composite resin molded body 10 can be produced by injection-molding the composite resin composition extruded from the melt-kneading apparatus.

(4) An aqueous dispersion of water-soluble covering resin 3 is applied to the surface of composite resin molded body 10. Specific examples of the coating method include die coating, screen printing, pad printing, inkjet, spraying, dip coating, and combinations thereof, but other coating methods may be used as long as the method can apply the aqueous dispersion of covering resin 3 to the three-dimensional shape of composite resin molded body 10. With this coating treatment, covering resin 3 can be impregnated from surface 10a of composite resin molded body 10. At this time, since at least one natural fiber 2 is exposed on surface 10a of composite resin molded body 10, and natural fibers 2 have contact points with each other, covering resin 3 can be impregnated into composite resin molded body 10. Thereafter, by performing a drying treatment, it is possible to realize composite resin molded body 10 impregnated with covering resin 3 having a configuration in which the amount of covering resin 3 covering natural fibers 2 is reduced at center 10b of composite resin molded body 10 with respect to the amount of covering resin 3 covering natural fibers 2 at surface 10a of composite resin molded body 10 or a configuration in which the amount of covering resin 3 covering natural fibers 2 is reduced from surface 10a of composite resin molded body 10 toward center 10b of composite resin molded body 10.

Hereinafter, the first exemplary embodiment will be described more specifically with reference to examples. The first exemplary embodiment is not limited by the following Examples, and can be implemented with appropriate modifications within a range that can be consistent with the above-described and later-described gist, and both of them are included in the technical scope of the first exemplary embodiment.

### (Example 1)

In Example 1, a composite resin molded body in which poly(3-hydroxybutyrate-co-3-hydroxyvalerate) (hereinafter, abbreviated as PHBV) was used as a base resin was produced by the following production method.
(1) Softwood pulp (product name: NBKP Celgar, manufactured by Mitsubishi Paper Mills Limited) was used as a starting material for the natural fiber. PHB depolymerase extracted from a culture solution of a Streptomyces microorganism was used as a PHBV-degrading enzyme.
(2) The softwood pulp and the PHB depolymerase were dry-blended at a mass ratio of 90 : 10 and pulverized by a roll mill to obtain a cellulose filler carrying the enzyme.
(3) Next, the cellulose filler carrying the enzyme and PHBV (product name: Y1000P manufactured by TianAn Biopolymer) as a base resin were weighed to have a mass ratio of 90 : 10, and then dry-blended. Thereafter, the mixture was melt-kneaded with a twin screw kneader (KRC kneader manufactured by Kurimoto, Ltd.). A screw was of a medium shear type. The conditions of the melt-kneading were a material temperature of 180°C and a rotation speed of 50 min⁻¹. The composite resin composition discharged from the twin screw kneader was hot-cut to prepare composite resin pellets in which the mass ratio of the base resin, the natural fibers, and the enzyme was 10 : 81 : 9.
(4) Thereafter, a composite resin molded body having a test piece shape was produced by an injection molding machine (180AD manufactured by The Japan Steel Works, Ltd.). The production conditions of the test piece were a base resin temperature of 180°C, a mold temperature of 50°C, an injection speed of 100 mm/s, and a holding pressure of 100 Pa. At this time, the total heating time in the melt-kneading and injection molding was set to less than or equal to 5 minutes. The shape of the test piece was changed according to the evaluation items described below.
(5) As the covering resin, a polyvinyl alcohol resin (PVA217 manufactured by Kuraray Co., Ltd.) was used as a water-soluble resin, and the resin was dissolved in pure water using a homomixer so that the weight solid content was 5%, whereby a water-soluble resin solution was produced. This water-soluble resin solution was placed in a glass container corresponding to the shape of the test piece together with the test piece, and they were kept for 1 hour with the test piece being immersed in the solution. Thereafter, the test piece was taken out and naturally dried for 24 hours to prepare a composite resin molded body impregnated with the covering resin. From the weight change before and after impregnation with the covering resin, the content of the covering resin was about 15 mass% when the composite resin molded body was taken as 100 mass%.

### (Evaluation of water absorbability of fiber)

The water absorbability of the fiber was evaluated by measuring the moisture regain of the fiber according to the method defined in JIS L0105:2020. Specifically, the weight of the fiber dried at 80°C for 24 hours was measured, and then the weight of the fiber maintained at a temperature of 20°C and a humidity of 65% for 24 hours was measured. A sample having a moisture regain of less than 5% was evaluated as "Poor", and a sample having a moisture content of greater than or equal to 5% was evaluated as "Good". In the composite resin molded body according to Example 1, the moisture regain of the softwood pulp was 6.5%, and the evaluation thereof was "Good".

### (Fiber end defibration)

The obtained composite resin molded body was immersed in chloroform and pure water to dissolve PHBV and PVA, and the shape of the remaining cellulose fibers was observed by SEM. The composite resin molded body according to Example 1 had an end of the fiber in a defibrated state.

### (Evaluation of elastic modulus of composite resin molded body)

A three-point bending test was performed using the obtained dumbbell-shaped test piece of JIS K7139 type A12 size. Here, as a method for evaluating the elastic modulus, a sample having a numerical value of less than 200 MPa was evaluated as "Poor", and a sample having a numerical value of greater than or equal to 200 MPa was evaluated as "Good". In the composite resin molded body according to Example 1, the elastic modulus of the test piece was 598 MPa, and the evaluation thereof was "Good".

### (Evaluation of biodegradability of composite resin molded body)

A biodegradation test was performed using a bar-shaped test piece formed of the obtained cellulose composite resin molded body. Into a plastic container, 50 g of a compost planting source (YK-11 manufactured by Yawata Corporation) was placed, a bar-shaped test piece having a height of 20 mm, a width of 10 mm, and a thickness of 3 mm, the weight of which was measured in advance, was embedded in the planting source, and held at a temperature of 58°C and a humidity of 50%, then the weight loss after 1 month and 2 months was evaluated. As a method for evaluating the biodegradation percentage, a sample having a weight loss of greater than or equal to 50% after 2 months was evaluated as "Good", and a sample having a weight loss of less than 50% was evaluated as "Poor". The biodegradation percentage of the test piece after 1 month was 22%, the biodegradation percentage after 2 months was 55%, and the evaluation was "Good".

### (Example 2)

In Example 2, a composite resin molded body was produced under the same material conditions and process conditions as in Example 1 except that the mass ratio of the base resin, the natural fiber, and the enzyme was changed to 60 : 31 : 9. The evaluation was performed in the same manner as in Example 1.

### (Comparative Example 1)

In Comparative Example 1, a composite resin molded body was produced under the same material conditions and process conditions as in Example 1 except that the covering resin was simultaneously combined in the process when the base resin and the cellulose filler carrying the enzyme were melt-kneaded instead of applying, impregnating, and drying the covering resin on the composite resin molded body later. The evaluation was performed in the same manner as in Example 1. The covering resin was blended such that the content of the covering resin with respect to the composite resin molded body was 15 mass%, which was the same as that in Example 1.

### (Comparative Example 2)

In Comparative Example 2, a composite resin molded body was produced under the same material conditions and process conditions as in Example 1 except that the natural fiber was not used and the volume ratio of the base resin and the enzyme was changed to 91 : 9. The evaluation was performed in the same manner as in Example 1.

### (Comparative Example 3)

In Comparative Example 3, a PET fiber carrying an enzyme was produced using a PET fiber having a fiber diameter of 20 µm and a fiber length of 100 µm instead of softwood pulp. A composite resin molded body was produced under the same material conditions and process conditions as in Example 1 except for the above. The evaluation was performed in the same manner as in Example 1.

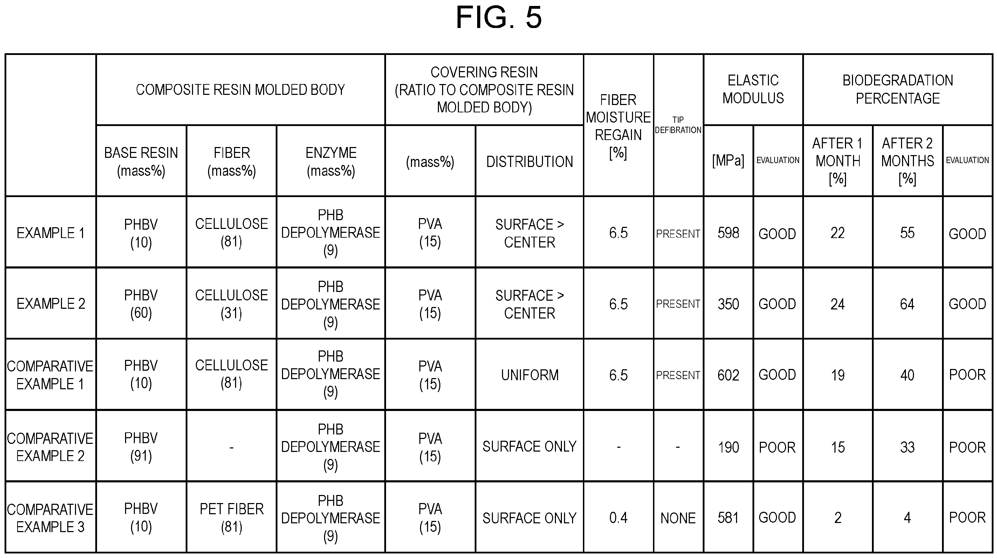

Fig. 5 shows the configurations and measurement results of the composite resin molded bodies in Examples 1 and 2 and Comparative Examples 1 to 3.

As is apparent from Fig. 5, in Examples 1 and 2 which are composite resin molded bodies in which the enzyme supported on the natural fiber was protected by the covering resin, the elastic modulus was as high as greater than or equal to 200 MPa, and Example 1 in which the proportion of the natural fiber was large showed a higher elastic modulus as compared with Example 2. The biodegradation percentage after 1 month is not much different from that of Comparative Examples, but the biodegradation percentage after 2 months is greatly promoted. The amount of the covering resin covering the natural fiber is reduced at the center of the composite resin molded body with respect to the amount of the covering resin covering the natural fibers at the surface of the composite resin molded body, or the amount of the covering resin covering the natural fiber is reduced from the surface of the composite resin molded body toward the center of the composite resin molded body. Thus, when the covering resin on the surface of the composite resin molded body is dissolved, the microorganism and/or enzyme supported on the natural fiber is released, and decomposition of the base resin on the surface of the composite resin molded body is promoted. Thereafter, since the covering resin is reduced toward the center of the composite resin molded body, dissolution of the covering resin is unnecessary, the microorganism and/or enzyme supported on the natural fiber is easily released, and decomposition of the base resin is accelerated. The promoted biodegradation percentage is a result of this process.

In Comparative Example 1 in which the covering resin was uniformly present in the composite resin molded body, the elastic modulus was as high as greater than or equal to 200 MPa, the biodegradation percentage after 1 month was equivalent to those in Examples 1 and 2, but the biodegradation percentage after 2 months was as low as less than or equal to 50%, and the evaluation was "Poor". This is because the covering resin needs to be dissolved toward the center of the composite resin molded body, thus the microorganism and/or enzyme supported on the natural fiber is hardly released, and the decomposition of the base resin is delayed.

In Comparative Example 2 produced without using natural fibers, the elastic modulus was decreased, and the evaluation thereof was "Poor". In addition, since the impregnation of the covering resin aqueous solution into the composite resin molded body with natural fibers did not proceed, the covering resin was present only on the surface of the composite resin molded body, and water absorption into the composite resin molded body with natural fibers was not performed, thus the dissolution of the covering resin did not proceed, the microorganism and/or enzyme supported on the natural fibers was hardly released, the decomposition of the base resin was delayed, the biodegradation percentage was as low as less than or equal to 50%, and the evaluation was "Poor".

In Comparative Example 3 produced using PET fibers instead of softwood pulp, the evaluation of the elastic modulus was ∘ because of the reinforcing effect of the PET fibers, but since the moisture regain of the PET fibers was low and there was no water absorbability, the covering resin was present only on the surface of the composite resin molded body as in Comparative Example 2, and water absorption with natural fibers into the composite resin molded body was not performed, thus dissolution of the covering resin did not proceed, the microorganism and/or enzyme supported on natural fibers was hardly released, decomposition of the base resin was delayed, the biodegradation percentage was as low as less than or equal to 50%, and the evaluation was "Poor".

From the above evaluation results, it was confirmed that a composite resin having high elastic modulus, high durability, and high biodegradability is obtained when a microorganism and/or enzyme supported on a plurality of natural fibers is included, at least a part of the plurality of natural fibers is covered with a covering resin, the amount of the covering resin covering the natural fibers is reduced at the center of the composite resin molded body with respect to the amount of the covering resin covering the natural fibers at the surface of the composite resin molded body, or the amount of the covering resin covering the natural fiber is reduced from the surface of the composite resin molded body toward the center of the composite resin molded body, at least one of the plurality of natural fibers has a portion exposed to the surface of the composite resin molded body, and the water absorption percentage of the natural fibers is high.

The present disclosure includes an appropriate combination of any exemplary embodiment and/or example among the various above-described exemplary embodiments and/or examples, and effects of each of the exemplary embodiments and/or examples can be achieved.

### INDUSTRIAL APPLICABILITY

According to the composite resin molded body according to the present disclosure, it is possible to provide a molded body capable of controlling mechanical strength and biodegradation speed as compared with conventional biodegradable plastics. Since the properties of the base resin can be improved by the present disclosure, the composite resin molded body according to the present disclosure can be used as an alternative to petroleum-derived general-purpose plastics. Therefore, the environmental load of various industrial products or daily commodities made of petroleum-derived general-purpose plastics can be significantly reduced. Further, the composite resin molded body according to the present disclosure can be used for packaging materials, daily necessities, housings for household electric appliances, building materials, and the like.

### REFERENCE MARKS IN THE DRAWINGS

- 1: base resin
- 2: natural fiber
- 3: covering resin
- 4: microorganism and/or enzyme
- 6: defibrated site
- 10: composite resin molded body
- 10a: surface of composite resin molded body
- 10b: center of composite resin molded body

## Claims

1. A composite resin molded body comprising:
a base resin;
a plurality of natural fibers dispersed in the base resin; and
a microorganism and/or enzyme supported on the plurality of natural fibers,
wherein
at least a part of surfaces of the plurality of natural fibers is covered with a covering resin,
the covering resin is reduced in amount at a center of the composite resin molded body with respect to the covering resin at a surface of the composite resin molded body, and
at least one of the plurality of natural fibers includes a portion exposed on the surface of the composite resin molded body.

2. The composite resin molded body according to Claim 1, wherein the covering resin is reduced in amount from the surface of the composite resin molded body toward the center of the composite resin molded body.

3. The composite resin molded body according to Claim 1, wherein the plurality of natural fibers have a moisture regain, as measured by a method defined in JIS L0105:2020, of greater than or equal to 5%.

4. The composite resin molded body according to Claim 1, wherein the base resin is a biodegradable resin containing any one selected from the group consisting of polyhydroxyalkanoic acids, polylactic acids, polybutylene succinates, polybutylene adipate terephthalates, polycaprolactones, polyamides, and modified starches.

5. The composite resin molded body according to Claim 1, wherein the covering resin is a water-soluble resin such as polyvinyl alcohol, polyethylene oxide, carboxymethyl cellulose, or a starch-based resin.

6. The composite resin molded body according to Claim 1, wherein the plurality of natural fibers in the composite resin molded body have a fiber surface carrying the microorganism and/or enzyme.

7. The composite resin molded body according to Claim 1, wherein the plurality of natural fibers are celluloses.

8. The composite resin molded body according to Claim 1, wherein the plurality of natural fibers include a defibrated site at an end in a fiber length direction.

9. The composite resin molded body according to Claim 1, wherein a content of the plurality of natural fibers carrying the microorganism and/or enzyme is greater than or equal to 10 mass% and less than or equal to 99 mass% relative to 100 mass% of the composite resin molded body.

10. A method for producing a composite resin molded body, the method comprising:
a step of preparing a microorganism and/or enzyme, a natural fiber, a covering resin having water solubility, and a base resin;
a step of causing the natural fiber to carry the microorganism and/or enzyme;
a base resin melt-kneading step of subjecting the natural fiber to a melt-kneading treatment together with the base resin and advancing fibrillation from an end in a fiber length direction of the natural fiber to obtain a composite resin composition in which a surface area of a defibrated portion at the end is enlarged;
a step of molding the composite resin composition to obtain a composite resin molded body; and
a step of applying a covering resin to a surface of the composite resin molded body, impregnating the composite resin molded body with the covering resin, and then drying the covering resin to obtain the composite resin molded body in which the covering resin is reduced in amount at a center of the composite resin molded body with respect to the covering resin at the surface of the composite resin molded body, and at least a part of a surface of the natural fiber is covered with the covering resin.
